# EUROPÄISCHE PATENTSCHRIFT

(11) **EP 4 222 538 B1**
(45) Veröffentlichungstag und Bekanntmachung des Hinweises auf die Patenterteilung: **08.10.2025**
(21) Anmeldenummer: 21778039.4
(22) Anmeldetag: 16.09.2021
(51) Int. Cl.: G02B 5/08, G02B 5/20, G02B 5/28, G02B 5/30, G02B 27/00, G02B 27/01, B32B 17/10, C03C 17/36

(54) **VERBUNDSCHEIBE FÜR EIN HEAD-UP-DISPLAY**
COMPOUND GLAZING FOR A HEAD-UP DISPLAY
VITRE COMPOSITE POUR UN AFFICHAGE TÊTE HAUTE

(30) Priorität: 30.09.2020 EP 20199286
(43) Veröffentlichungstag der Anmeldung: 09.08.2023
(73) Patentinhaber: Saint-Gobain Sekurit France, 60150 Thourotte (FR)
(72) Erfinder: HAGEN, Jan, 53123 Bonn (DE); GIRARD, Pauline, 60200 COMPIEGNE (FR)
(74) Vertreter: Weber, Sophie
(86) Internationale Anmeldenummer: PCT/EP2021/075461
(87) Internationale Veröffentlichungsnummer: WO 2022/069240

(56) Entgegenhaltungen:
- WO-A1-2019/110172
- WO-A1-2019/179682
- WO-A1-2020/094422
- CN-A- 103 073 196
- CN-A- 106 564 242
- CN-A- 106 646 874
- DE-U1- 202019 102 388

## Beschreibung

Die Erfindung betrifft eine Verbundscheibe für ein Head-Up-Display und eine Projektionsanordnung für ein Head-Up-Display.

Fahrzeuge, insbesondre Personenkraftwagen (PKW), werden immer häufiger mit sogenannten Head-Up-Displays ("Kopf-oben-Anzeige") ausgestattet. Ein Head-Up-Display (HUD) ist ein Anzeigesystem, welches dem Fahrer eines Fahrzeugs in sein Sichtfeld zusätzliche Informationen in Form von Bildern projiziert.

Das Head-Up-Display besteht aus einem Projektor (bildgebende Einheit) und mehreren Optikmodulen zur Umlenkung bzw. Spiegelung (Reflektion) eines Bildes auf eine Projektionsfläche bzw. Reflexionsfläche. Dabei dient üblicherweise eine Verbundscheibe, insbesondere die Windschutzscheibe des Fahrzeugs, als Projektionsfläche. Obwohl das Bild auf die Windschutzscheibe projiziert wird, schwebt es in der Wahrnehmung des menschlichen Auges des Fahrers entfernt über der Motorhaube des Fahrzeugs.

Auf diese Weise können zusätzliche Informationen in das Blickfeld des Fahrers projiziert werden, beispielsweise die aktuelle Fahrgeschwindigkeit und Navigations- oder Warnhinweise, die der Fahrer wahrnehmen kann, ohne seine Blickrichtung ändern zu müssen. Head-Up-Displays können so wesentlich zur Steigerung der Verkehrssicherheit beitragen.

Üblicherweise besteht das durch den Projektor erzeugte Bild aus polarisierter, insbesondere S-polarisierter Lichtstrahlung. Das S-polarisierte Licht trifft unter einem bestimmten Einfallswinkel auf die Verbundscheibe und wird zumindest teilweise sowohl in die Verbundscheibe hinein gebrochen als auch als S-polarisiertes Licht in das Sichtfeld des Fahrers reflektiert. Allerdings werden die reflektierten Bilder nicht farbecht oder mit unerwünschter Reflektion, sogenannten Doppelbildern, dargestellt.

Der Einfallswinkel der S-polarisierten Strahlung beträgt üblicherweise etwa 65%, was in etwa dem Brewster-Winkel für einen Luft-Glas-Übergang (57,2° für Kalk-Natron-Glas) entspricht. Dabei tritt das Problem auf, dass das Projektorbild an beiden äußeren Übergängen von Luft zu Glas und von Glas zur Luft reflektiert wird. Dadurch tritt neben dem gewünschten Hauptbild auch ein leicht versetztes Nebenbild auf, das sogenannte Geisterbild ("Ghost"). Das Problem wird dadurch gemildert, dass die Oberflächen der Windschutzscheibe in einem Winkel zueinander angeordnet werden. Dies geschieht durch die Verwendung einer keilförmigen Zwischenschicht bei der Lamination der als Verbundscheibe ausgebildeten Windschutzscheibe. Dadurch kann eine Überlagerung des Hauptbildes und des Geisterbildes erzielt werden.

Keilfolien sind kostspielig, so dass die Herstellung einer solchen Verbundscheibe für ein HUD recht kostenintensiv ist. Es besteht daher Bedarf an HUD Systemen, die mit Windschutzscheiben ohne Keilfolien auskommen. So ist es beispielsweise möglich, den HUD-Projektor mit P-polarisierter Strahlung zu betreiben, welche an den Scheibenoberflächen aufgrund der Einstrahlung nahe des Brewster-Winkels nicht wesentlich reflektiert wird. Als Reflexionsfläche für die P-polarisierte Strahlung weist die Windschutzscheibe stattdessen eine Reflexionsbeschichtung auf.

Die DE 10 2014 220189 A1 offenbart eine HUD-Projektionsanordnung mit P-polarisierter Strahlung und einer metallischen Schicht als reflektierender Struktur. Auch die WO 2019/046157 A1 offenbart ein HUD System mit P-polarisierter Strahlung. Dabei wird eine Reflexionsbeschichtung mit mindestens zwei metallischen Schichten verwendet.

Die CN 106 646 874 A offenbart eine Verbundscheibe für ein HUD. Die Verbundscheibe weist eine Nano-Beschichtung auf, die P-polarisiertes Licht reflektiert.

WO 2020/94422 A1 offenbart eine Verbundscheibe für ein HUD-System. Die Verbundscheibe weist eine elektrisch leitfähige Beschichtung auf einer zur Zwischenschicht hingewandten Oberfläche der Außenscheibe oder der Innenscheibe oder innerhalb der Zwischenschicht auf, wobei die Strahlung des HUD-Projektors P-polarisiert ist.

Verglasungen wie sie in Windschutzscheiben, Panoramadächern und Schiebedächern verwendet werden, erfordern bekannterweise einen spezifischen Sonnenschutz. Ein Maß für die totale transmittierte Wärmestrahlung durch die Scheibe wird durch den sogenannten TTS-Wert beschrieben. Der TTS-Wert kann beispielsweise gemäß der ISO 13837 gemessen werden. Bei einer hohen Lichttransmission wird zu viel Wärmestrahlung durch die Verglasung transmittiert. Bei einer sehr niedrigen Lichttransmission ist die Verglasung insgesamt zu dunkel, sodass die Person hinter der Verglasung nicht mehr durch diese hindurchsehen kann.

Die Aufgabe der vorliegenden Erfindung besteht darin, eine Verbundscheibe für ein Head-Up-Display bereitzustellen, die eine gute Reflektivität für P-polarisierte Strahlung im sichtbaren Spektralbereich aufweist und den TTS-Wert verbessert.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe für ein Head-Up-Display (HUD) verfügt über eine erste Scheibe und eine zweite Scheibe, die über eine thermoplastische Zwischenschicht miteinander verbunden sind. Die erste Scheibe weist eine erste Oberfläche (I) und eine zweite Oberfläche (II) auf. Die zweite Scheibe weist ebenfalls eine erste Oberfläche (III) und eine zweite Oberfläche (IV) auf. Weiterhin weist die Verbundscheibe einen HUD-Bereich und eine erste Beschichtung auf, die geeignet ist P-polarisierte Strahlung zu reflektieren. Die erste Beschichtung umfasst genau eine elektrisch leitfähige Schicht auf Basis von Silber.

Die Verbundscheibe ist dafür vorgesehen, in einer Fensteröffnung eines Fahrzeugs den Innenraum gegenüber der äußeren Umgebung abzutrennen. Die Verbundscheibe ist bevorzugt die Windschutzscheibe eines Kraftfahrzeugs, insbesondere eines Personen- oder Lastkraftwagens.

Wie bei HUDs üblich bestrahlt ein Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann durch optische Elemente (z.B. Spiegel) variiert werden, insbesondere vertikal, um die Projektion an die Körpergröße des Betrachters anzupassen.

Zur Erzeugung eines HUD-Bildes wird P-polarisierte Strahlung verwendet. Die Verbundscheibe weist eine erste Beschichtung auf, die geeignet ist P-polarisierte Strahlung zu reflektieren, wobei sie eine elektrisch leitfähige Schicht auf Basis von Silber umfasst.

Da der für HUD-Projektionsanordnungen typische Einfallswinkel von etwa 65° dem Brewsterwinkel für einen Luft-Glas-Übergang (57,2°, Kalk-Natron-Glas) relativ nahekommt, wird P-polarisierte Strahlung von Scheibenoberflächen kaum reflektiert, während S-polarisierte Strahlung deutlich stärker reflektiert wird. Die Reflektion der P-polarisierten Strahlung findet hauptsächlich an der ersten Beschichtung statt.

Um die Transmission der totalen Wärmestrahlung zu reduzieren ist eine zweite Beschichtung vorgesehen. Dadurch wird die Erwärmung im Inneren von Räumen oder Fahrzeugen minimiert und der energetische Aufwand zur Schaffung eines der im Innern befindlichen Person angenehmen Umgebungsklimas reduziert.

Mit anderen Worten ist erfindungsgemäß vorgesehen, dass die Verbundscheibe eine erste Beschichtung zur Reflexion von P-polarisierter Strahlung und eine zweite Beschichtung zur Reduzierung der totalen transmittierten Wärmestrahlung durch die Verbundscheibe aufweist. Überraschend hat sich gezeigt, dass eine solche erfindungsgemäße Verbundscheibe gegenüber den bisher bekannten Verbundscheiben deutlich verbesserte TTS-Werte (ISO 13837) aufweist. Bei einer Transmission im sichtbaren Bereich > 70% kann der TTS-Wert auf diese Weise um bis zu 5% reduziert werden, ohne dabei die optischen Reflexionseigenschaften der Verbundscheibe negativ zu beeinflussen.

Erfindungsgemäß ist die erste Reflexionsbeschichtung auf einer Oberfläche (III, IV) der zweiten Scheibe und die zweite Beschichtung auf einer Oberfläche (I, II) der ersten Scheibe angeordnet sein. Die erste und die zweite Beschichtung sind bevorzugt auf einer der Zwischenschicht zugewandten Oberfläche der beiden Scheiben aufgebracht, wobei die erste Beschichtung auf der ersten Oberfläche (III) der zweiten Scheibe und die zweite Beschichtung auf der zweiten Oberfläche (II) der ersten Scheibe angeordnet ist.

Die zweite Beschichtung weist bevorzugt mehrere rein dielektrische Schichten auf, wobei sie mindestens eine erste dielektrische Schicht oder Schichtfolge umfasst, deren Brechungsindex größer als 1.9 und eine zweite rein dielektrische Schicht oder Schichtfolge, deren Brechungsindex kleiner als 1.6 ist. Besonders bevorzugt kann eine dritte rein dielektrische Schicht oder Schichtfolge vorgesehen sein, deren Brechungsindex größer als 1.9 ist und wobei die zweite rein dielektrische Schicht oder Schichtfolge zwischen der ersten rein dielektrischen Schicht oder Schichtfolge und der dritten rein dielektrische Schicht oder Schichtfolge angeordnet ist. Die Schichten oder Schichtfolgen können abwechselnd aufeinander aufgebaut sein. Die erste und zweite rein dielektrische Schicht oder Schichtfolge enthält bevorzugt Siliziumnitrid Si₃N₄, Zinnoxid SnO₂, Zinkoxid ZnO, Titandioxid TiO₂, Zirkoniumdioxid ZrO₂, Hafniumoxid HfO₂, Vanadiumoxid V₂O₅, Nioboxid Nb₂O₅, Tantaloxid Ta₂O₅, Wolframoxid WO₃. Die zweite rein dielektrische Schicht oder Schichtfolge enthält bevorzugt Siliziumdioxid SiO₂, Calciumfluorid CaF₂, Magnesiumflourid MgF₂ oder eine nanoporöse Schicht.

Die zweite rein dielektrische Schicht oder Schichtfolge weist eine hohe mechanische und chemische Stabilität auf und reagiert wenig empfindlich auf Wasser oder organische Verschmutzungen. Ihre Herstellung ist mit deutlich geringeren Kosten verbunden. Die antireflektierende Wirkung wird einerseits durch den Brechungsindex und andererseits durch die Dicke der zweiten rein dielektrischen Schicht oder Schichtfolge bestimmt. Im Fall der nanoporösen Schicht hängt wiederum der Brechungsindex von der Porengröße und die Dichte der Poren ab. In einer bevorzugten Ausgestaltung sind die Poren derart abgemessen und verteilt, dass der Brechungsindex von 1,2 bis 1,4, besonders bevorzugt von 1,25 bis 1,35 beträgt. Die Dicke der zweiten rein dielektrischen Schicht oder Schichtfolge beträgt bevorzugt von 30 nm bis 500 nm, besonders bevorzugt von 50 nm bis 150 nm.

Die erste Beschichtung ist ein Dünnschichtstapel. Der Dünnschichtstapel besteht aus einer Schichtenfolge dünner Einzelschichten. Dieser Dünnschichtstapel enthält genau eine elektrisch leitfähige Schicht auf Basis von Silber. Die elektrisch leitfähige Schicht auf Basis von Silber verleiht der ersten Beschichtung die grundlegenden reflektierenden Eigenschaften und außerdem eine IR-reflektierende Wirkung sowie eine elektrische Leitfähigkeit. Die elektrisch leitfähige Schicht auf Basis von Silber kann auch vereinfacht als Silberschicht bezeichnet werden.

Die elektrisch leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Palladium, Gold, Kupfer oder Aluminium. Die geometrische Schichtdicke der Silberschicht beträgt bevorzugt höchstens 15 nm [Nanometer], besonders bevorzugt höchstens 14 nm, ganz besonders bevorzugt 10 nm. Dadurch kann eine vorteilhafte Reflektivität im IR-Bereich erzielt werden, ohne die Transmission im sichtbaren Bereich zu stark herabzusetzen. Die geometrische Schichtdicke der Silberschicht beträgt bevorzugt mindestens 7 nm, besonders bevorzugt mindestens 8 nm. Besonders bevorzugt beträgt die geometrische Schichtdicke der Silberschicht 10 nm bis 14 nm.

In einer vorteilhaften Ausgestaltung umfasst die erste Beschichtung keine dielektrischen Schichten, deren Brechungsindex weniger als 1,9 beträgt. Alle dielektrischen Schichten der Reflexionsbeschichtung weisen also einen Brechungsindex von mindestens 1,9 auf. Es ist ein besonderer Vorteil der vorliegenden Erfindung, dass die gewünschten Reflexionseigenschaften allein mit relativ hochbrechenden dielektrischen Schichten erreicht werden können. Da für niedrigbrechende Schichten mit einem Brechungsindex von kleiner als 1,9 insbesondere Siliziumoxid-Schichten in Frage kommen, die geringe Abscheidungsraten bei der magnetfeldunterstützten Kathodenabscheidung aufweisen, lässt sich die erste Beschichtung so schnell und kostengünstig herstellen.

Die erste Beschichtung enthält oberhalb und unterhalb der Silberschicht unabhängig voneinander jeweils eine dielektrische Schicht oder eine dielektrische Schichtenfolge mit einem Brechungsindex von mindestens 1,9. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor.

Die optische Dicke der oberen dielektrischen Schicht oder Schichtenfolge der ersten Beschichtung beträgt bevorzugt von 50 nm bis 200 nm, besonders bevorzugt von 130 nm bis 170 nm. Die optische Dicke der unteren dielektrischen Schicht oder Schichtenfolge beträgt bevorzugt von 30 nm bis 100 nm, besonders bevorzugt von 35 nm bis 90 nm. Damit werden gute Ergebnisse erzielt.

Grundsätzlich ist es ausreichend, wenn der HUD-Bereich der Verbundscheibe, insbesondere als einer Windschutzscheibe, mit der ersten Beschichtung und zweiten Beschichtung versehen ist. Es können aber auch weitere Bereiche mit der ersten und zweiten Beschichtung versehen sein. Die Verbundscheibe kann im Wesentlichen vollflächig mit der ersten und zweiten Beschichtung versehen sein, was herstellungsbedingt bevorzugt sein kann.

In einer Ausgestaltung der Erfindung sind mindestens 80% der Scheibenoberfläche mit der ersten und zweiten Beschichtung versehen. Insbesondere ist die erste und zweite Beschichtung vollflächig auf die Scheibenoberfläche aufgebracht mit Ausnahme eines umlaufenden Randbereichs und optional lokalen Bereichs, die als Kommunikations-, Sensor- oder Kamerafenster die Transmission von elektromagnetischer Strahlung durch die Windschutzscheibe gewährleisten sollen und daher nicht mit der ersten Beschichtung versehen sind. Der umlaufende unbeschichtete Randbereich weist beispielsweise eine Breite von bis zu 20 cm auf. Er verhindert den direkten Kontakt der ersten Beschichtung zur umgebenden Atmosphäre, so dass die erste Beschichtung im Innern der Windschutzscheibe vor Korrosion und Beschädigung geschützt ist.

Die erfindungsgemäße Verbundscheibe bewirkt eine hohe Reflektivität gegenüber P-polarisierter Strahlung im Spektralbereich von 450 nm bis 650 nm (Nanometer), der für HUD-Darstellungen relevant ist. HUD Projektoren arbeiten typischerweise mit Wellenlängen von 473 nm, 550 nm und 630 nm (RGB). Dadurch wird ein intensitätsstarkes HUD-Bild erreicht.

Der Projektor ist innenraumseitig der Verbundscheibe angeordnet und bestrahlt die Verbundscheibe über eine innenraumseitige Oberfläche der zweiten Scheibe. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein.

Der Projektor ist auf den HUD-Bereich gerichtet und bestrahlt diesen zur Erzeugung der HUD-Projektion. Die Strahlung des Projektors ist erfindungsgemäß überwiegend P-polarisiert, weist also einen P-polarisierten Strahlungsanteil von größer als 50% auf. Je höher der Anteil der P-polarisierten Strahlung an der Gesamtstrahlung des Projektors ist, desto intensitätsstärker ist das gewünschte Projektionsbild und desto intensitätsschwächer ist eine unerwünschte Reflexion an der Oberfläche (IV) der innenraumseitigen zweiten Scheibe der Verbundscheibe. Der P-polarisierte Strahlungsanteil des Projektors beträgt bevorzugt mindestens 70%, besonders bevorzugt mindestens 80% und insbesondere bevorzugt mindestens 90%. In einer besonders vorteilhaften Ausgestaltung ist die Strahlung des Projektors im Wesentlichen rein P-polarisiert - der P-polarisierte Strahlungsanteil beträgt also 100% oder weicht nur unwesentlich davon ab. Die Angabe der Polarisationsrichtung bezieht sich dabei auf die Einfallsebene der Strahlung auf der Verbundscheibe, insbesondere Windschutzscheibe. Mit P-polarisierter Strahlung wird eine Strahlung bezeichnet, deren elektrisches Feld in der Einfallsebene schwingt. Mit S-polarisierter Strahlung wird eine Strahlung bezeichnet, deren elektrisches Feld senkrecht zur Einfallsebene schwingt. Die Einfallsebene wird durch den Einfallsvektor und die Flächennormale der Windschutzscheibe im geometrischen Zentrum des bestrahlten Bereichs aufgespannt.

Die Strahlung des Projektors trifft bevorzugt mit einem Einfallswinkel von 45° bis 75°, insbesondere von 60° bis 70° auf die Windschutzscheibe. In einer vorteilhaften Ausgestaltung weicht der Einfallswinkel um höchstens 10° vom Brewsterwinkel ab. Die P-polarisierte Strahlung wird dann nur unwesentlich an den Oberflächen der Innenscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Windschutzscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 57,2°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der P-polarisierten Strahlung nur unwesentlich zunimmt.

Da die Reflexion der Projektorstrahlung im Wesentlichen an der ersten Beschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Verbundscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Windschutzscheibe, ebenso wie die Innenscheibe und die Außenscheibe. Eine keilartige Zwischenschicht würde dagegen im vertikalen Verlauf zwischen Unterkante und Oberkante der Windschutzscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Windschutzscheibe günstiger gestaltet.

Die erste Scheibe und die zweite Scheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der ersten Scheibe als Außenscheibe und der zweiten Scheibe als Innenscheibe kann breit variieren. Vorzugsweise werden Scheiben mit einer Dicke im Bereich von 0,8 mm bis 5 mm, bevorzugt von 1,1 mm bis 2,5 mm verwendet, beispielsweise die mit den Standarddicken 1,6 mm oder 2,1 mm.

Die zweite Scheibe und die thermoplastische Zwischenschicht können klar und farblos, aber auch getönt oder gefärbt sein. Die Gesamttransmission durch die Windschutzscheibe (samt Reflexionsbeschichtung) beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die erste Scheibe und die zweite Scheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Erfindungsgemäß ist die erste Scheibe getönt oder gefärbt. Dadurch kann die außenseitige Reflektivität der Verbundscheibe verringert werden, wodurch der Eindruck der Scheibe angenehmer gestaltet wird für einen äußeren Betrachter. Um allerdings die vorgeschriebene Lichttransmission von 70% für Windschutzscheiben zu gewährleisten (Gesamttransmission), sollte die Außenscheibe (hier also erste Scheibe) bevorzugt eine Lichttransmission von mindestens 80% aufweisen, besonders bevorzugt von mindestens 85%. Die zweite Scheibe und die Zwischenschicht sind bevorzugt klar, also nicht getönt oder gefärbt. Beispielsweise kann grün oder blau gefärbtes Glas als Außenscheibe eingesetzt werden.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet. Die Dicke der Zwischenschicht beträgt bevorzugt von 0,2 mm bis 2 mm, besonders bevorzugt von 0,3 mm bis 1 mm.

Die Verbundscheibe kann hergestellt werden durch an sich bekannte Verfahren. Die erste Scheibe und die zweite Scheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die erste Beschichtung wird bevorzugt durch physikalische Gasphasenabscheidung (PVD) auf eine Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Die zweite Beschichtung wird bevorzugt durch PVD oder durch ein nasschemisches Abscheidungsverfahren abgeschieden. Die Beschichtungen werden bevorzugt vor der Lamination aufgebracht.

Die Erfindung umfasst auch eine Projektionsanordnung für ein Head-Up-Display, wobei die Projektionsanordnung die erfindungsgemäße Verbundscheibe und einen Projektor umfasst, wobei der Projektor auf den HUD-Bereich der Verbundscheibe gerichtet ist und die Strahlung des Projektors überwiegend P-polarisiert ist.

Im Folgenden wird die Erfindung anhand von Figuren und Ausführungsbeispielen näher erläutert. Die Figuren sind eine schematische Darstellung und nicht maßstabsgetreu. Die Figuren schränken die Erfindung in keiner Weise ein.

Es zeigen:
- Figur 1: eine Draufsicht auf eine Verbundscheibe einer gattungsgemäßen Projektionsanordnung,
- Figur 2: einen Querschnitt durch die Verbundscheibe,
- Figur 3 A: einen Querschnitt durch eine erste Ausgestaltung einer erfindungsgemäßen Verbundscheibe,
- Figur 3 B: einen Querschnitt durch eine alternative Gestaltungsvariante, die nicht der vorliegenden Erfindung entspricht,
- Figur 4: einen Querschnitt durch eine Ausgestaltung einer ersten Beschichtung und einer zweiten Beschichtung, und
- Figur 5: ein Reflexionsspektrum von einer erfindungsgemäßen Verbundscheibe bei P-polarisierter Strahlung.

Angaben mit Zahlenwerten sind in aller Regel nicht als exakte Werte zu verstehen, sondern beinhalten auch eine Toleranz von +/- 1 % bis zu +/- 10 %.

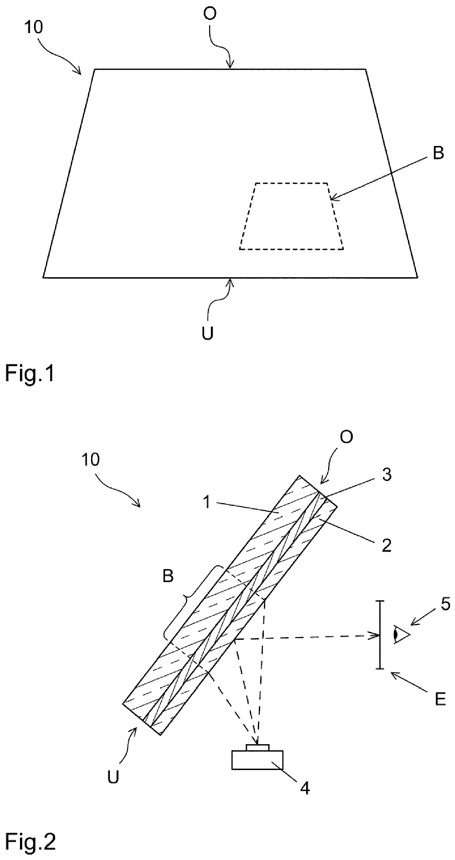

Figur 1 zeigt schematisch eine Verbundscheibe 10. Figur 2 zeigt schematisch eine gattungsgemäße Projektionsanordnung für ein HUD. Die Projektionsanordnung umfasst eine Verbundscheibe 10, die als Windschutzscheibe eines Personenkraftwagens ausgebildet ist. Weiterhin weist die Projektionsanordnung einen Projektor 4 auf, der auf einen Bereich der Verbundscheibe 10 gerichtet ist. Dieser Bereich wird üblicherweise als HUD-Bereich B bezeichnet. In diesem Bereich können durch den Projektor 4 erzeugte Bilder projektiert werden, welche von einem Betrachter 5 (z.B. Fahrzeugfahrer) als virtuelle Bilder auf der von ihm abgewandten Seite der Verbundscheibe 10 wahrgenommen werden, wenn sich seine Augen innerhalb der sogenannten Eyebox E befinden.

Die Verbundscheibe 10 ist aufgebaut aus einer ersten Scheibe 1 als Außenscheibe und einer zweiten Scheibe 2 als Innenscheibe des Personenkraftwagens, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die erste Scheibe 1 ist in Einbaulage der äußeren Umgebung zugewandt, die zweite Scheibe 2 dem Fahrzeuginnenraum.

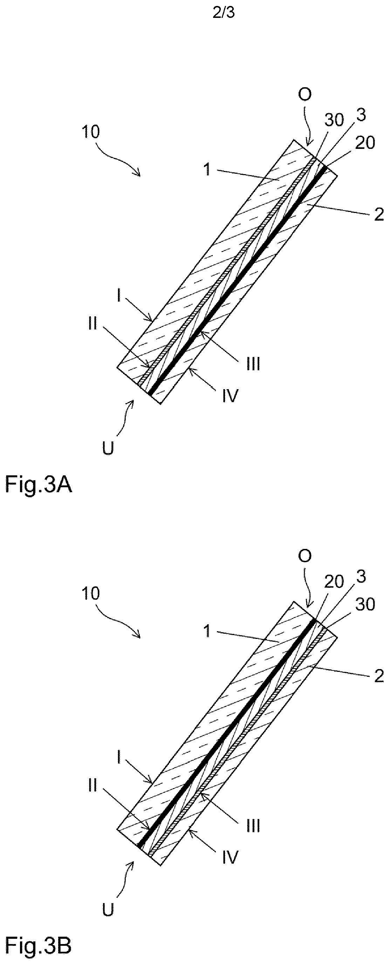

Figur 3A zeigt schematisch eine erste Ausgestaltung der Verbundscheibe 10 im Querschnitt.

Die erste Scheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Weiterhin umfasst die Verbundscheibe 1 die zweite Scheibe 2, welche eine außenseitige Oberfläche III und eine innenraumseitige Oberflache IV aufweist. Die Oberfläche III ist in Einbaulage der äußeren Umgebung zugewandt. Hingegen ist die Oberfläche IV in Einbaulage der äußeren Umgebung zugewandt.

Die erste Scheibe 1 weist beispielsweise eine Dicke von 2,1 mm auf, die zweite Scheibe 2 eine Dicke von 1,6 mm oder 2,1 mm. Die Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit.

Die innenseitige Oberfläche II der ersten Scheibe 1 ist mit einer erfindungsgemäßen zweiten Beschichtung 30 versehen, die zur Reduzierung des TTS-Werts vorgesehen ist. Die außenseitige Oberfläche III der zweiten Scheibe 2 ist mit einer erfindungsgemäßen ersten Beschichtung 20 versehen, die als Reflexionsfläche für die Projektorstrahlung (und eventuell zusätzlich als IR-reflektierende Beschichtung) vorgesehen ist.

Die Strahlung des Projektors 4 ist im Wesentlichen P-polarisiert. Da der Projektor 4 die Verbundscheibe 10 mit einem Einfallswinkel von etwa 65° bestrahlt, der nahe dem sogenannten Brewster-Winkel liegt, wird die Strahlung des Projektors nur unwesentlich an den externen Oberflächen I, IV der Verbundscheibe 10 reflektiert. Die erste Beschichtung 20 dagegen ist auf die Reflexion der P-polarisierter Strahlung optimiert. Sie dient als Reflexionsfläche für die Strahlung des Projektors 4 zur Erzeugung der HUD-Projektion.

Figur 3B zeigt schematisch eine alternative Ausgestaltung der Verbundscheibe 10, die jedoch nicht Teil der vorliegenden Erfindung ist.

Figur 3B unterscheidet sich von Figur 3A in der Anordnung der ersten Beschichtung 20 und der zweiten Beschichtung 30. In diesem Beispiel ist die erste Beschichtung 20 an der innenseitigen Oberfläche II der ersten Scheibe 1 angeordnet. Dagegen ist die zweite Beschichtung 30 an der außenseitigen Oberfläche III der zweiten Scheibe 2 aufgebracht.

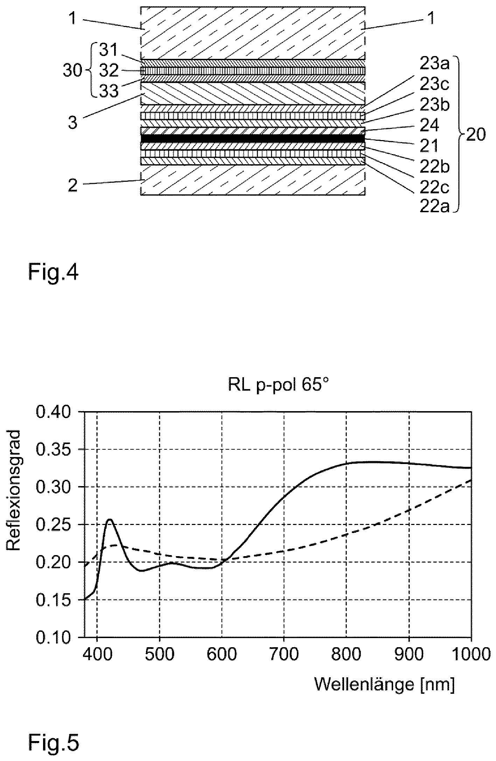

Figur 4 zeigt die Schichtenfolge einer Ausgestaltung der erfindungsgemäßen ersten Beschichtung 20 und zweiten Beschichtung 30. Die erste Beschichtung 20 und die zweite Beschichtung 30 sind jeweils ein Stapel von Dünnschichten.

Die erste Beschichtung 20 umfasst eine elektrisch leitfähige Schicht 21 auf Basis von Silber.

Direkt oberhalb der elektrisch leitfähigen Schicht ist eine metallische Blockerschicht 24 angeordnet. Darüber ist eine obere dielektrische Schichtenfolge angeordnet, die von unten nach oben aus einer oberen Anpassungsschicht 23b, einer oberen brechungsindexsteigernden Schicht 23c und einer oberen Entspiegelungsschicht 23a besteht.

Unterhalb der elektrisch leitfähigen Schicht 21 ist eine untere dielektrische Schichtenfolge angeordnet, die von oben nach unten aus einer unteren Anpassungsschicht 22b, einer unteren brechungsindexsteigernden Schicht 22c und einer unteren Entspiegelungsschicht 22a besteht.

Die zweite Beschichtung 30 umfasst direkt oberhalb der Zwischenschicht 3 eine dritte rein dielektrische Schicht 33 Titandioxid, eine zweite rein dielektrische Schicht 32, die Siliziumdioxid Schicht aufweist, und eine erste rein dielektrische Schicht 31 Titandioxid.

Materialien und Schichtdicken können den nachfolgenden Beispiel entnommen werden.

Die Schichtenfolgen einer Verbundscheibe 10 mit der ersten Beschichtung 20 auf der außenseitigen Oberfläche III der zweiten Scheibe 2 und der zweiten Beschichtung 30 auf der innenseitigen Oberfläche II der ersten Scheibe 1 gemäß des erfindungsgemäßen Beispiels 1 sind, zusammen mit den Materialien und geometrische Schichtdicken der Einzelschichten, in Tabelle 1 dargestellt. Die dielektrischen Schichten der ersten Beschichtung 20 können unabhängig voneinander dotiert sein, beispielsweise mit Bor oder Aluminium.

**Tabelle 1:**

| Material | Bezugszeichen | | Schichtdicke |
|---|---|---|---|
| TiO | 31 | 30 | 90 nm |
| SiO | 32 | | 150 nm |
| TiO | 33 | | 121 nm |
| PVB | 3 | | 0,76 mm |
| SiN | 23a | 20 | 62 nm |
| SiZrN | 23c | | 10 nm |
| ZnO | 23b | | 10 nm |
| NiCr | 24 | | 0,3 nm |
| **Ag** | 21 | | **10,5 nm** |
| ZnO | 22b | | 10 nm |
| SiZrN | 22c | | 10 nm |
| SiN | 22a | | 25 nm |

Durch die zusätzliche Reflexion/Absorption der Wärmestrahlung an der zweiten Beschichtung wird der TTS-Wert der Verbundscheibe 10 bis zu 5 % verbessert, sprich reduziert. Dieses Ergebnis war für den Fachmann unerwartet und überraschend. Zusätzlich ist die Außenscheibe 1 getönt oder gefärbt.

In Figur 5 ist ein Reflexionsspektrum der Verbundscheibe 10 mit einem Schichtenaufbau gemäß Tabelle 1 dargestellt. Das Reflexionsspektrum wurde mit einer Lichtquelle, die im betrachteten Spektralbereich P-polarisierte Strahlung gleichmäßiger Intensität ausstrahlt, aufgenommen, bei Betrachtung über die zweite Scheibe 2 (die sogenannte innenraumseitige Reflexion über der Innenscheibe) unter einem Einstrahlwinkel von 65° zur innenraumseitigen Flächennormalen. Aus der graphischen Darstellung des Spektrums ist ersichtlich, dass die erfindungsgemäßen Beschichtungen der Verbundscheibe 10 trotz eines verbesserten TTS-Wertes die Reflektivität, insbesondere im IR-Bereich (>700 nm), der Verbundscheibe 10 verbessern werden konnte.

Die erzielten optischen Parameter sind in der folgenden Tabelle 2 wiedergeben.

**Tabelle 2:**

| Erfindungsgemäßes Beispiel | | Vergleichsbeispiel | |
|---|---|---|---|
| TLA | 71.4 | TL A | 71.4 |
| a*t | -5.1 | a*t | -1.4 |
| b*t | 6.6 | b*t | 3.7 |
| RL(A) | 24.2 | RL(A) | 24.0 |
| a*c 8° | 7.1 | a*c 8° | -0.8 |
| b*c 8° | -9.6 | b*c 8° | -4,0 |
| RL(A) 60° | 32.4 | RL(A) 60° | 28.4 |
| a*c 60° | 4.4 | a*c 60° | -0.1 |
| b*c 60° | -1.9 | b*c 60° | -2.6 |
| RL(A) p-pol | 20.0 | RL(A) p-pol | 20.5 |
| a*p-pol | 3.5 | a*p-pol | 0.4 |
| b*p-pol | -2.2 | b*p-pol | -2.1 |
| TTS | 53.7 | TTS | 59.8 |

| | | | |
|---|---|---|---|
| Folgende kolorimetrischen Koordinaten und Parameter sind aufgeführt: Lichttransmission gemäß Lichtart A: TL A, Farbwerte a*t und b*t gemäß Lichtart D65, 10°, Lichtreflexion gemäß Lichtart A: RL A, Farbwerte a*c und b*c gemäß Lichteinfallswinkel 8° Lichtart D65,10°, Lichtreflexion gemäß Lichteinfallswinkel 60°: RL A 60° (Lichtquelle D60, Lichtart A), Farbwerte a*c und b*c gemäß 60° Lichtart D65,10°, Lichtreflexion gemäß P-polarisierte Strahlung: RL (A) p-pol, Lichtart A, Farbwerte a*c und b*c gemäß P-polarisierte Strahlung, Lichtart D65,10° TTS-Wert | | | |

Es ist ersichtlich, dass das erfindungsgemäße Beispiel verbesserte optische Parameter aufwies. Ein wesentlicher Vorteil der erfindungsgemäßen Verbundscheibe 10 besteht darin, dass der TTS-Wert reduziert wird und gleichzeitig die Refelktivität verbessert wird.

### Bezugszeichenliste:

- 1: erste Scheibe
- 2: zweite Scheibe
- 3: thermoplastische Zwischenschicht
- 4: Projektor
- 5: Betrachter / Fahrzeugfahrer
- 10: Verbundscheibe

- 20: erste Beschichtung
- 21: elektrisch leitfähige Schicht
- 22a: erste untere dielektrische Schicht / Entspiegelungsschicht
- 22b: zweite untere dielektrische Schicht / Anpassungsschicht
- 22c: dritte untere dielektrische Schicht / brechungsindexsteigernde Schicht
- 23a: erste obere dielektrische Schicht / Entspiegelungsschicht
- 23b: zweite obere dielektrische Schicht / Anpassungsschicht
- 23c: dritte obere dielektrische Schicht / brechungsindexsteigernde Schicht
- 24: metallische Blockerschicht

- 30: zweite Beschichtung
- 31: erste rein dielektrische Schicht
- 32: zweite rein dielektrische Schicht
- 33: dritte rein dielektrische Schicht
- O: Oberkante der Verbundschutzscheibe 10
- U: Unterkante der Verbundschutzscheibe 10
- B: HUD-Bereich der Verbundschutzscheibe 10
- E: Eyebox

- I: außenseitige, von der Zwischenschicht 3 abgewandte Oberfläche der ersten Scheibe 1
- II: innenraumseitige, zur Zwischenschicht 3 hingewandte Oberfläche der ersten Scheibe 1
- III: außenseitige, zur Zwischenschicht 3 hingewandte Oberfläche der zweiten Scheibe 2
- IV: innenraumseitige, von der Zwischenschicht 3 abgewandte Oberfläche der zweiten Scheibe 2

## Patentansprüche

1. Verbundscheibe für ein Head-Up-Display, mindestens umfassend
• eine erste Scheibe (1) mit einer ersten Oberfläche (I) und einer zweiten Oberfläche (II), eine zweite Scheibe (2) mit einer ersten Oberfläche (III) und einer zweiten Oberfläche (IV) und eine thermoplastische Zwischenschicht (3), welche zwischen der zweiten Oberfläche (II) der ersten Scheibe (1) und der ersten Oberfläche (III) der zweiten Scheibe (2) angeordnet ist,
• einen HUD-Bereich (B), und
• eine erste Beschichtung (20) zur Reflektion von P-polarisierter Strahlung und genau eine elektrisch leitfähige Schicht (21) auf Basis von Silber aufweisend,
wobei eine zweite Beschichtung (30) zur Reduzierung der totalen transmittierten Wärmestrahlung vorgesehen ist, wobei die erste Beschichtung (20) auf einer Oberfläche (III, IV) der zweiten Scheibe (2) und die zweite Beschichtung (30) auf einer Oberfläche (I, II) der ersten Scheibe (1) angeordnet ist und wobei die erste Scheibe (1) getönt oder gefärbt ist.

2. Verbundscheibe nach Anspruch 1, wobei die erste Beschichtung (20) auf der ersten Oberfläche (III) der zweiten Scheibe (2) angeordnet ist.

3. Verbundscheibe nach Anspruch 1 oder 2, wobei die zweite Beschichtung (30) auf der zweiten Oberfläche (II) der ersten Scheibe (1) angeordnet ist.

4. Verbundscheibe nach einem der Ansprüche 1 bis 3, wobei die zweite Beschichtung (30) mehrere rein dielektrische Schichten (31, 32, 33) aufweist.

5. Verbundscheibe nach einem der Ansprüche 1 bis 4, wobei die zweite Beschichtung (30) mindestens eine erste dielektrische Schicht (31) oder Schichtfolge, deren Brechungsindex größer als 1.9 und eine zweite dielektrische Schicht (32) oder Schichtfolge, deren Brechungsindex kleiner als 1.6 ist, abwechselnd umfasst.

6. Verbundscheibe nach Anspruch 5, wobei die erste rein dielektrische Schicht (31) oder Schichtfolge Siliziumnitrid, Zinnoxid, Zinkoxid, Titandioxid, Zirkoniumdioxid, Hafniumoxid, Vanadiumoxid, Nioboxid, Tantaloxid oder Wolframoxid aufweist.

7. Verbundscheibe nach Anspruch 5, wobei die zweite rein dielektrische Schicht (32) oder Schichtfolge SiO₂, MgF₂ oder eine nanoporöse Schicht aufweist.

8. Verbundscheibe nach einem der Ansprüche 1 bis 7, wobei die elektrisch leitfähige Schicht eine geometrische Dicke von 8 nm bis 14 nm, insbesondere 10 nm, aufweist.

9. Verbundscheibe nach einem der Ansprüche 1 bis 8, wobei die erste Beschichtung (20) durch Magnetronsputtern und/oder die zweite Beschichtung (30) durch Magnetronsputtern oder durch ein nasschemische Abscheidungsverfahren abgeschieden wurden.

10. Verbundscheibe nach einem der Ansprüche 3 bis 9, wobei die zweite Beschichtung (30) direkt oberhalb der Zwischenschicht (3) eine dritte rein dielektrische Schicht (33) Titandioxid, eine zweite rein dielektrische Schicht (32), die Siliziumdioxid Schicht aufweist, und eine erste rein dielektrische Schicht (31) Titandioxid umfasst.

11. Verbundscheibe nach Anspruch 10, wobei direkt oberhalb der elektrisch leitfähigen Schicht (21) eine metallische Blockerschicht (24) angeordnet ist, und darüber eine obere dielektrische Schichtenfolge angeordnet ist, die von unten nach oben aus einer oberen Anpassungsschicht (23b), einer oberen brechungsindexsteigernden Schicht (23c) und einer oberen Entspiegelungsschicht (23a) besteht.

12. Verbundscheibe nach Anspruch 11, wobei unterhalb der elektrisch leitfähigen Schicht (21) eine untere dielektrische Schichtenfolge angeordnet ist, die von oben nach unten aus einer unteren Anpassungsschicht (22b), einer unteren brechungsindexsteigernden Schicht (22c) und einer unteren Entspiegelungsschicht (22a) besteht.

13. Projektionsanordnung für ein Head-Up-Display, mindestens umfassend
• eine Verbundscheibe (10) nach einem der Ansprüche 1 bis 12 und
• einen Projektor (4), der auf den HUD-Bereich (B) der Verbundscheibe (10) gerichtet ist, wobei die Strahlung des Projektors (4) überwiegend P-polarisiert ist.

## Claims

1. Laminated pane for a head-up display, at least comprising
• a first pane (1) having a first surface (I) and a second surface (II), a second pane (2) having a first surface (III) and a second surface (IV), and a thermoplastic intermediate layer (3) which is arranged between the second surface (II) of the first pane (1) and the first surface (III) of the second pane (2),
• an HUD region (B), and
• a first coating (20) for reflecting P-polarized radiation and having exactly one electrically conductive layer (21) based on silver, wherein a second coating (30) is provided for reducing the total transmitted thermal radiation, wherein the first coating (20) is arranged on a surface (III, IV) of the second pane (2) and the second coating (30) is arranged on a surface (I, II) of the first pane (1), and wherein the first pane (1) is tinted or colored.

2. Laminated pane according to claim 1, wherein the first coating (20) is arranged on the first surface (III) of the second pane (2).

3. Laminated pane according to claim 1 or 2, wherein the second coating (30) is arranged on the second surface (II) of the first pane (1).

4. Laminated pane according to any of claims 1 to 3, wherein the second coating (30) comprises a plurality of purely dielectric layers (31, 32, 33).

5. Laminated pane according to any of claims 1 to 4, wherein the second coating (30) comprises, in an alternating manner, at least a first dielectric layer (31) or layer sequence having a refractive index greater than 1.9 and a second dielectric layer (32) or layer sequence having a refractive index less than 1.6.

6. Laminated pane according to claim 5, wherein the first purely dielectric layer (31) or layer sequence comprises silicon nitride, tin oxide, zinc oxide, titanium dioxide, zirconium dioxide, hafnium oxide, vanadium oxide, niobium oxide, tantalum oxide or tungsten oxide.

7. Laminated pane according to claim 5, wherein the second purely dielectric layer (32) or layer sequence comprises SiO₂, MgF₂ or a nanoporous layer.

8. Laminated pane according to any of claims 1 to 7, wherein the electrically conductive layer has a geometric thickness of 8 nm to 14 nm, in particular 10 nm.

9. Laminated pane according to any of claims 1 to 8, wherein the first coating (20) was deposited by magnetron sputtering and/or the second coating (30) was deposited by magnetron sputtering or by a wet chemical deposition process.

10. Laminated pane according to any of claims 3 to 9, wherein the second coating (30) comprises, directly above the intermediate layer (3), a third purely dielectric layer (33) of titanium dioxide, a second purely dielectric layer (32) having a silicon dioxide layer, and a first purely dielectric layer (31) of titanium dioxide.

11. Laminated pane according to claim 10, wherein a metal blocking layer (24) is arranged directly above the electrically conductive layer (21), and an upper dielectric layer sequence is arranged thereover, which consists, from bottom to top, of an upper adaptation layer (23b), an upper refractive index-increasing layer (23c) and an upper anti-reflection layer (23a).

12. Laminated pane according to claim 11, wherein a lower dielectric layer sequence is arranged below the electrically conductive layer (21), which lower dielectric layer sequence consists, from top to bottom, of a lower adaptation layer (22b), a lower refractive index-increasing layer (22c) and a lower anti-reflection layer (22a).

13. Projection arrangement for a head-up display, at least comprising
• a laminated pane (10) according to any of claims 1 to 12, and
• a projector (4) directed onto the HUD region (B) of the laminated pane (10), wherein the radiation of the projector (4) is predominantly P-polarized.

## Revendications

1. Vitrage feuilleté pour un affichage tête haute (HUD), comprenant au moins
• une première vitre (1) comportant une première surface (I) et une seconde surface (II), une seconde vitre (2) comportant une première surface (III) et une seconde surface (IV) et une couche intermédiaire (3) thermoplastique qui est disposée entre la seconde surface (II) de la première vitre (1) et la première surface (III) de la seconde vitre (2),
• une zone HUD (B), et
• un premier revêtement (20) pour la réflexion d'un rayonnement polarisé P et présentant exactement une couche électroconductrice (21) à base d'argent, dans lequel un second revêtement (30) est prévu pour la réduction du rayonnement thermique total transmis, dans lequel le premier revêtement (20) est disposé sur une surface (III, IV) de la seconde vitre (2) et le second revêtement (30) sur une surface (I, II) de la première vitre (1), et dans lequel la première vitre (1) est teintée ou colorée.

2. Vitrage feuilleté selon la revendication 1, dans lequel le premier revêtement (20) est disposé sur la première surface (III) de la seconde vitre (2).

3. Vitrage feuilleté selon la revendication 1 ou 2, dans lequel le second revêtement (30) est disposé sur la seconde surface (II) de la première vitre (1).

4. Vitrage feuilleté selon l'une des revendications 1 à 3, dans lequel le second revêtement (30) présente plusieurs couches purement diélectriques (31, 32, 33).

5. Vitrage feuilleté selon l'une des revendications 1 à 4, dans lequel le second revêtement (30) comprend, en alternance, au moins une première couche diélectrique (31) ou succession de couches diélectriques dont l'indice de réfraction est supérieur à 1,9 et une deuxième couche diélectrique (32) ou succession de couches diélectriques dont l'indice de réfraction est inférieur à 1,6.

6. Vitrage feuilleté selon la revendication 5, dans lequel la première couche purement diélectrique (31) ou succession de couches purement diélectriques présente du nitrure de silicium, oxyde d'étain, oxyde de zinc, dioxyde de titane, dioxyde de zirconium, oxyde d'hafnium, oxyde de vanadium, oxyde de niobium, oxyde de tantale ou oxyde de tungstène.

7. Vitrage feuilleté selon la revendication 5, dans lequel la deuxième couche purement diélectrique (32) ou succession de couches purement diélectriques présente du SiO₂, du MgF₂ ou une couche nanoporeuse.

8. Vitrage feuilleté selon l'une des revendications 1 à 7, dans lequel la couche électroconductrice présente une épaisseur géométrique allant de 8 nm à 14 nm, en particulier de 10 nm.

9. Vitrage feuilleté selon l'une des revendications 1 à 8, dans lequel le premier revêtement (20) a été déposé par pulvérisation magnétron et/ou le second revêtement (30) a été déposé par pulvérisation magnétron ou par un procédé de dépôt chimique par voie humide.

10. Vitrage feuilleté selon l'une des revendications 3 à 9, dans lequel le second revêtement (30) comprend, directement au-dessus de la couche intermédiaire (3), une troisième couche purement diélectrique (33) de dioxyde de titane, une deuxième couche purement diélectrique (32) présentant une couche de dioxyde de silicium, et une première couche purement diélectrique (31) de dioxyde de titane.

11. Vitrage feuilleté selon la revendication 10, dans lequel une couche de blocage métallique (24) est disposée directement au-dessus de la couche électroconductrice (21), et une succession de couches diélectriques supérieures est disposée au-dessus, laquelle se compose, de bas en haut, d'une couche d'adaptation supérieure (23b), d'une couche augmentant l'indice de réfraction supérieure (23c) et d'une couche antireflet supérieure (23a).

12. Vitrage feuilleté selon la revendication 11, dans lequel une succession de couches diélectriques inférieures est disposée sous la couche électroconductrice (21) et est constituée, de haut en bas, d'une couche d'adaptation inférieure (22b), d'une couche augmentant l'indice de réfraction inférieure (22c) et d'une couche antireflet inférieure (22a).

13. Système de projection pour un affichage tête haute (HUD), comprenant au moins
• un vitrage feuilleté (10) selon l'une des revendications 1 à 12, et
• un projecteur (4) dirigé vers la zone HUD (B) du vitrage feuilleté (10), dans lequel le rayonnement du projecteur (4) est principalement polarisé P.
